# FASCICULE DE BREVET EUROPEEN

(11) **EP 3 122 005 B1**
(45) Date de publication et mention de la délivrance du brevet: **18.04.2018**
(21) Numéro de dépôt: 16180380.4
(22) Date de dépôt: 20.07.2016
(51) Int. Cl.: H04L 12/715, H04L 12/751

(54) **SYSTÈME DE ROUTAGE PERMETTANT LE FILTRAGE DE DONNÉES POUR L'INTÉGRATION ET LE TEST D'ÉQUIPEMENTS OPÉRATIONNELS**
ROUTING-SYSTEM, DAS EINE DATENFILTERUNG ZUR INTEGRATION UND ÜBERPRÜFUNG DER BETRIEBSAUSRÜSTUNGEN ERMÖGLICHT
ROUTING SYSTEM ALLOWING THE FILTERING OF DATA FOR INTEGRATING AND TESTING OPERATIONAL EQUIPMENT

(30) Priorité: 24.07.2015 FR 1501590
(43) Date de publication de la demande: 25.01.2017
(73) Titulaire: Thales, 92400 Courbevoie (FR)
(72) Inventeur: DELLANDREA, Brice, 06800 Cagnes sur Mer (FR)
(74) Mandataire: Priori, Enrico

(56) Documents cités:
- "OpenFlow Switch Specification", , 5 décembre 2011 (2011-12-05), XP055177510, Extrait de l'Internet: URL:https://www.opennetworking.org/images/ stories/downloads/sdn-resources/onf-specif ications/openflow/openflow-spec-v1.2.pdf
- JINZHEN BAO ET AL: "Towards Software Defined SpaceWire Networks", 2014 INTERNATIONAL SPACEWIRE CONFERENCE (SPACEWIRE), UNIVERSITY OF DUNDEE, 22 septembre 2014 (2014-09-22), pages 1-4, XP032669397, DOI: 10.1109/SPACEWIRE.2014.6936256

## Description

L'invention se situe dans le domaine du filtrage des paquets de données dans un réseau de communication, et plus particulièrement celui des tests d'équipements satellites communiquant selon le protocole SpaceWire et ses évolutions.

Les différents équipements d'un satellite communiquent en utilisant le protocole SpaceWire. Ce protocole, standardisé sous l'appellation ECSS-E-ST-50-12C, est un standard de communication développé par l'ESA (acronyme pour Agence Spatiale Européenne). Il permet la mise en réseau de différents équipements comme par exemple des capteurs, des mémoires, des unités de traitement et des systèmes de télémétrie, à travers des liens série, haut débit et bidirectionnels ainsi que des routeurs.

Les phases d'intégration et de test d'une mise en réseau de différents équipements dans un satellite, nécessitent la mise en oeuvre de solutions de supervision du trafic échangé entre chacun de ces équipements, afin de vérifier leur bon fonctionnement ou d'investiguer sur l'origine de pannes. Les solutions actuelles de supervision du trafic sur un réseau de communication SpaceWire consistent à insérer entre chaque noeud du réseau des équipements de supervision. Ainsi, le standard OpenFlow : «OpenFlow Switch Specification» , 5 décembre 2011, XP055177510, version 1.2, décrit un protocole permettant d'échanger des données entre un contrôleur de réseau et un routeur.

Ce mode opératoire nécessite la déconnexion et reconnexion des équipements de vol, ce qui est une opération lourde en termes d'intervention, parfois délicate à mener en raison de l'encombrement des équipements une fois assemblés, et pouvant dégrader les connectiques des équipements de vol.

Il nécessite également une multiplication des équipements de supervision. Un réseau SpaceWire classique contenant au minimum une vingtaine de liens, cela impose de disposer d'autant d'équipements de supervision, pour avoir une image d'ensemble du trafic échangé.

De manière à pouvoir superviser et enregistrer l'ensemble du trafic transitant entre différents équipements d'un satellite en phase d'intégration et de test, l'invention propose une architecture de réseau de communication dans lequel un seul équipement de test est nécessaire pour acquérir l'ensemble du trafic du réseau. Pour ceci, l'invention propose de mettre en oeuvre des techniques de routage basées sur des adresses logiques multiples.

L'invention s'applique en particulier dans les réseaux basés sur le protocole de communication SpaceWire, mais également dans les réseaux basés sur le protocole SpaceFibre (évolution du protocole SpaceWire pour le très haut débit), et plus généralement pour l'ensemble des réseaux utilisant des protocoles permettant les adressages multiples.

A cet effet, l'invention décrit un équipement de supervision des échanges de données dans un réseau de communication comprenant une pluralité de noeuds échangeant des données par paquets, et au moins un routeur configuré pour router lesdits paquets de données entre les différents noeuds. L'équipement de supervision est caractérisé en ce qu'il est configuré pour permettre la mise à jour des tables de routage des au moins un dits routeurs, et pour, lors de la réception d'un paquet de données depuis un routeur sur un de ses ports, renvoyer ledit paquet de données au routeur par le même port sans le modifier.

Avantageusement, l'équipement de supervision des échanges de données utilise un protocole de communication choisi parmi le protocole SpaceWire et le protocole SpaceFibre.

L'invention décrit également un réseau de communication comprenant une pluralité de noeuds échangeant des données par paquets, et au moins un routeur configuré pour router lesdits paquets de données entre lesdits noeuds identifiés par des adresses dans le réseau. Le réseau de communication est caractérisé en ce que :
- au moins un desdits noeuds est configuré pour ajouter en tête de chacun des paquets de données émis une adresse spécifique,
- ledit réseau de communication permet de connecter au moins un équipement de supervision des données à un des au moins un dits routeurs,
- lesdits au moins un routeur sont configurés pour transmettre les paquets de données comportant une dite adresse spécifique audit au moins un équipement de supervision ou au noeud destinataire en fonction de ladite adresse spécifique, et
- ledit au moins un équipement de supervision est configuré pour renvoyer au routeur auquel il est connecté par un port, les paquets de données reçus sans les modifier.

Avantageusement, dans le réseau de communication précédent, ladite adresse spécifique est une adresse associée au noeud destinataire, et différente de son adresse dans le réseau.

Cette adresse peut également être associée à d'autres informations permettant de caractériser le flux.

Selon un mode de réalisation du réseau de communication selon l'invention, lesdits noeuds et lesdits au moins un routeur sont intégrés dans un satellite, et ledit au moins un équipement de supervision est situé à l'extérieur dudit satellite.

Avantageusement, dans le réseau de communication selon l'invention, lesdits noeuds, ledit au moins un routeur, et ledit au moins un équipement de supervision utilisent un protocole de communication choisi parmi le protocole SpaceWire et le protocole SpaceFibre.

Enfin, l'invention consiste en un procédé de communication dans un réseau de communication comprenant une pluralité de noeuds échangeant des données par paquets, et au moins un routeur configuré pour router lesdits paquets de données entre des noeuds identifiés par des adresses dans le réseau, ledit réseau comprenant au moins un connecteur permettant de connecter au moins un équipement de supervision à un des dits au moins un routeur. Le procédé est caractérisé en ce qu'il comprend :
- lors de la transmission de paquets de données dans le réseau de communication :
   ∘ une étape d'ajout, en tête du paquet de données émis par un noeud du réseau, d'au moins une adresse spécifique,
   ∘ une première étape de routage du paquet de données vers l'un parmi un noeud de destination ou ledit équipement de supervision, selon l'adresse en tête du paquet et lesdites tables de routage,
      ▪ lorsque les données sont transmises vers l'équipement de supervision, une étape de réception du paquet de données par ledit équipement de supervision et de réémission à l'identique, suivi d'une deuxième étape de routage du paquet de données vers ledit noeud de destination,
   ∘ une étape de réception, par ledit noeud de destination, du paquet de données, et
- une étape de mise à jour des tables de routage de chacun des routeurs du réseau, lors de la connexion d'un dit équipement de supervision,
- une étape de mise à jour des tables de routage de chacun des routeurs du réseau, lors de la déconnexion d'un équipement de supervision.

Avantageusement, dans le procédé de communication selon l'invention, ladite adresse spécifique est une adresse associée au noeud destinataire, et différente de son adresse dans le réseau.

Avantageusement, dans le procédé de communication selon l'invention, ladite première étape de routage du paquet de données vers un noeud de destination ou ledit équipement de supervision, comprend en outre la suppression de ladite adresse spécifique en tête du paquet de données lorsque le routeur est le dernier routeur parcouru par ledit paquet de données.

Dans un mode de réalisation du procédé de communication selon l'invention, l'adresse spécifique ajoutée en tête de chacun des paquets de données émis est en outre associée au noeud émetteur.

Dans un mode de réalisation du procédé de communication selon l'invention, l'adresse spécifique ajoutée en tête de chacun des paquets de données émis est en outre associée au type de données transmises.

Avantageusement, dans le procédé de communication selon l'invention, ledit réseau de communication utilise un protocole de communication choisi entre le protocole SpaceWire et le protocole SpaceFibre.

L'invention sera mieux comprise et d'autres caractéristiques et avantages apparaîtront mieux à la lecture de la description qui suit, donnée à titre non limitatif, et grâce aux figures annexées parmi lesquelles :
- la figure 1 présente un exemple de réseau de communication selon l'état de l'art,
- la figure 2 présente un mode de réalisation d'un réseau de communication selon l'invention,
- la figure 3 présente les étapes de réalisation d'un procédé de communication selon l'invention, et
- la figure 4 présente un deuxième mode de réalisation d'un réseau de communication selon l'invention.

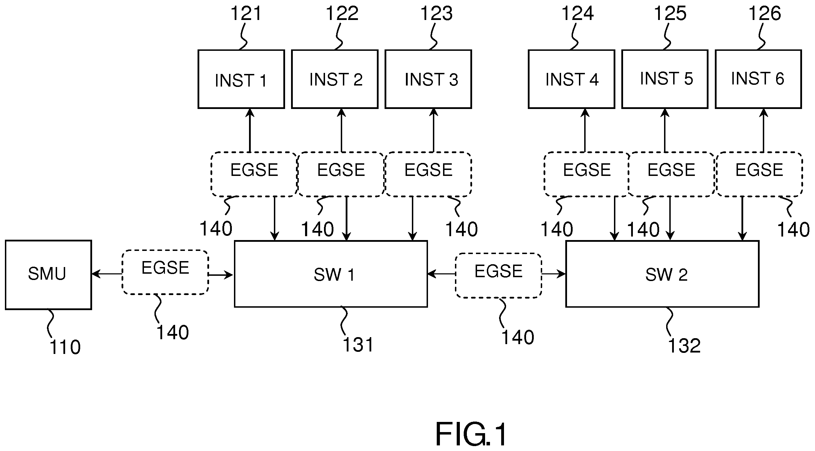

La figure 1 illustre un exemple de réseau de communication selon l'état de l'art.

Dans la suite du document, ce réseau utilisera le protocole de communication SpaceWire, mais l'invention s'applique manière identique à l'ensemble des réseaux de communication dès lors qu'ils offrent la possibilité de définir plusieurs adresses de destinataires consécutifs.

Le protocole SpaceWire présente l'avantage d'être simple et fiable. Il ne requiert que peu de logique sur les différents équipements du réseau, ce qui limite les probabilités de pannes et d'erreurs, et est donc particulièrement adapté pour les applications spatiales.

Dans la figure 1 figurent plusieurs équipements d'un réseau de communication sur un satellite. Dans l'exemple, ce réseau comprend un calculateur central 110, nommé SMU (acronyme anglais pour System Management Unit), dont le rôle est de centraliser la fonction de commande et contrôle de l'ensemble des équipements satellites, et notamment de superviser les différents équipements du réseau et de recueillir les informations transmises par ces équipements. Dans la figure 1, six équipements 121 à 126 représentent différents instruments de bord ou capteurs.

Ces équipements représentent des noeuds du réseau, et servent à illustrer le fonctionnement général. Ils peuvent être remplacés par n'importe quel autre type d'équipements. La présence du SMU n'est pas indispensable. Ce type de réseau de communication est caractéristique des réseaux embarqués sur des satellites, où l'intelligence et l'autonomie bord sont centralisées le plus possible dans le calculateur central. Les routeurs n'ont aucune intelligence, et donc aucune autonomie pour adapter le chemin de routage lorsque le réseau est modifié. Leur table de routage est déterminée par un élément extérieur au routeur, souvent par le SMU lui-même.

Les différents équipements sont reliés par le biais de routeurs ou commutateurs (en anglais switches) 131 et 132, dont le rôle est d'acheminer les données au sein du réseau en commutant des chemins. Ces routeurs contiennent des tables de routage, utilisées pour associer les adresses positionnées en tête des paquets avec un port de sortie.

Le protocole SpaceWire permet de réaliser le routage des données au sein du réseau selon un adressage physique ou logique. Il y a toujours au moins une adresse logique sur un paquet Spacewire transitant sur un réseau.

Dans le cas d'un adressage physique, les paquets transmis comportent en entête les numéros des ports de sortie de chaque routeur rencontré de proche en proche pour atteindre la destination finale.

Ainsi, les paquets transmis prennent la forme suivante :
<destination_1><...><destination_N><destination_finale><donnée s><fin_de_paquet>.

Par exemple, dans la figure 1, un paquet transmis par l'instrument 6 à destination de l'instrument 2 aura la forme :
<L_{SW2}><L_{SW1}><_{INST2}><données><fin_de_paquet>,
où L_{SW2} représente le numéro du port de sortie à utiliser par le deuxième routeur pour atteindre le premier routeur, L_{SW1} le numéro du port de sortie à utiliser par le premier routeur pour atteindre l'instrument 2, et <L_{INST2}> l'adresse de l'instrument 2.

Dans le cas d'un adressage physique, lorsque les routeurs reçoivent un paquet, ils utilisent un mécanisme de suppression des entêtes pour supprimer l'adresse en tête du paquet, puis utilisent le numéro du port spécifié pour transmettre le paquet au destinataire suivant. De cette manière, le paquet parvenant à l'instrument 2 est de la forme :
<L_{INST2}><données><fin_de_paquet>.

Dans le cas d'un adressage logique, les paquets émis comportent usuellement uniquement l'adresse de destination (toujours dans le même exemple, <L_{INST2}><données><fin_de_paquet>). Chacun des routeurs du réseau comprend une table de routage, qui indique le numéro du port de sortie associé à cette adresse logique à utiliser pour transmettre le paquet. Les tables de routage indiquent également si l'octet de tête des paquets doit être supprimé. Ce mode de fonctionnement est plus souple, et permet de déporter la complexité de la connaissance des chemins à parcourir depuis les instruments vers un organe centralisé qui programme l'ensemble des routeurs du réseau (typiquement un opérateur sol, ou le SMU). Un noeud émetteur ne spécifiant ainsi qu'une adresse logique, virtuelle, le réseau est configuré pour amener la donnée vers la destination correspondant à cette adresse.

Les champs d'adresse définis dans le protocole SpaceWire comportent 8 bits, ce qui limite le nombre d'adresses possibles à 256 : 32 adresses physiques, 223 adresses logiques, et une adresse réservée. L'utilisation, optionnelle, du cumul d'adresses logiques permet d'augmenter la capacité des réseaux en créant des sous réseaux de 223 utilisateurs maximum.

Pour ce faire, le réseau est compartimenté en sous réseaux, le mécanisme de multi-adressage décrit dans le mécanisme d'adressage physique étant utilisé pour faire transiter les messages entre les différents sous réseaux. Par exemple, il est possible d'utiliser deux adresses, la première adresse correspondant à l'adresse d'un sous réseau de destination, et la seconde adresse à une adresse à l'intérieur du sous réseau de destination. Le mécanisme de suppression des entêtes est alors de nouveau utilisé afin de supprimer le premier entête lorsque le paquet arrive au sous-réseau de destination.

De cette manière, les capacités du réseau sont théoriquement illimitées.

Lors des phases d'intégration et de test d'un satellite, effectuées lors de l'assemblage des divers équipements le composant, il est nécessaire d'analyser les données échangées par les équipements, ce qui requiert la mise en place d'un équipement de supervision 140 pour chacun des liens de communication. Cet équipement est généralement nommé EGSE (acronyme anglais pour Electrical Ground Support Equipment).

Dans l'exemple représenté en figure 1, huit EGSE sont nécessaires afin de superviser l'ensemble des liens du réseau. L'invention propose de superviser l'ensemble des liens de communication du réseau depuis un seul EGSE.

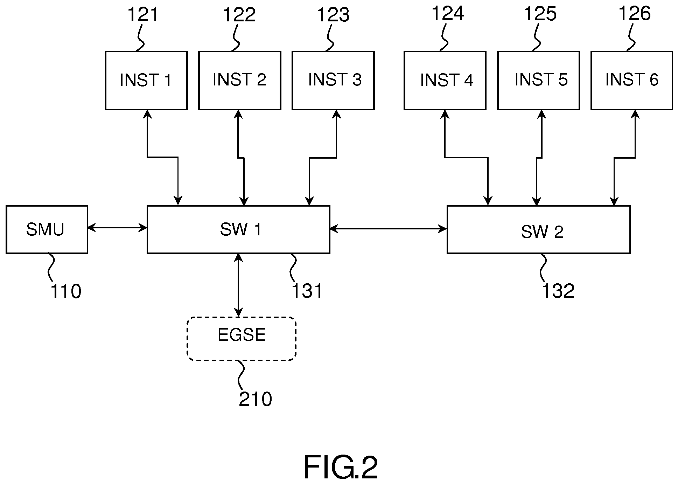

La figure 2 présente un mode de réalisation d'un réseau de communication selon l'invention.

Ce mode de réalisation reprend l'ensemble des équipements du réseau représenté dans la figure 1. Il comporte en outre un unique équipement de supervision EGSE 210.

L'invention utilise le mode d'adressage logique du protocole SpaceWire. Elle consiste, lorsqu'un équipement transmet un paquet, à ajouter en entête une adresse supplémentaire permettant de caractériser le flux de données transmis. Cette adresse est une adresse spécifique associée à l'équipement destinataire du paquet, et/ou à d'autres informations comme par exemple l'équipement à l'origine de l'émission du paquet, ou le type de contenu. Le choix des informations que l'adresse permet d'identifier permet de configurer la granularité du tri des paquets effectué.

Pour illustrer le fonctionnement, considérons le cas où le troisième instrument de bord 123 souhaite envoyer au SMU 110 un paquet. Ce paquet aura la forme suivante :
<L_{SMU}><données><fin_de_paquet>,
   où L_{SMU} est l'adresse de l'équipement SMU 110.

L'invention consiste à ajouter en entête du paquet de données transmis une adresse supplémentaire spécifique, comme par exemple une adresse associée au couple émetteur/récepteur, L'_{INST3SMU}.

Le paquet transmis par INST3 aura donc la forme suivante :
<L'_{INST3SMU}><L_{SMU}><données><fin_de_paquet>.
L'adresse L'_{INST3SMU} est une adresse spécifique qui permet d'associer le paquet au noeud d'émission ayant l'adresse L_{INST3} et au noeud destinataire ayant l'adresse L_{SMU}, tout en étant différente de ces deux adresses.

Lors de la connexion de l'équipement de supervision EGSE 210 au réseau, celui-ci transmet à l'ensemble des routeurs du réseau une consigne de mise à jour des tables de routage, afin que les paquets comportant l'entête < L'_{INST3SMU}> soient acheminés jusqu'à lui à travers le réseau.

Le routeur SW1 131, auquel l'équipement de supervision est relié, utilise le mécanisme de suppression des entêtes pour supprimer l'adresse supplémentaire spécifique positionnée en tête du paquet, et transmettre à l'EGSE le paquet <L_{SMU}><données><fin_de_paquet>. Les autres routeurs parcourus (dans l'exemple, le deuxième routeur 132) ne modifient pas l'entête du paquet.

L'EGSE ayant reçu le paquet, il le mémorise pour ses traitements de supervision du trafic réseau, et le renvoie dans le réseau sans le modifier (fonction enregistreur & répéteur), ce qui permet d'avoir une image du flux échangé.

L'EGSE renvoie le paquet de données sur le port par lequel il l'a reçu, atteignant ainsi le routeur. Dans l'exemple, le paquet de données est renvoyé sans modifications par l'EGSE au premier routeur 131, qui reçoit alors le paquet <L_{SMU}><données><fin_de_paquet> et le route vers le SMU.

Lorsque l'équipement de supervision n'est pas présent dans le réseau, les tables de routage des routeurs du réseau sont configurées pour que les paquets comportant l'entête <L'_{INST3SMU}> soient transmis à l'équipement de destination, c'est-à-dire dans ce cas précis le SMU. Le routeur relié au SMU est configuré pour utiliser le mécanisme de suppression des entêtes afin de supprimer l'entête supplémentaire spécifique, et de transmettre au SMU le paquet <L_{SMU}><données><fin_de_paquet>.

Ainsi, le réseau selon l'invention ne nécessite que peu d'adaptations par rapport à un réseau standard basé sur le protocole SpaceWire.

Ces adaptations sont les suivantes :
- Réserver des adresses spécifiques associées au minimum à l'équipement destinataire,
- Ajouter ces adresses particulières en tête des paquets transmis par les différents équipements,
- Mettre à jour les tables de routage des routeurs,
- Configurer l'équipement de supervision EGSE pour renvoyer au routeur auquel il est connecté les paquets reçus sans les modifier, sur le port sur lequel le paquet a été reçu (fonction matérielle supplémentaire non implémentée sur les équipements standards).

L'invention fonctionne donc de manière transparente pour l'équipement destinataire des paquets, et ne nécessite pas de modification du mode de fonctionnement des routeurs. Ces derniers continuent à guider les données dans le réseau en fonction de l'adresse positionnée en tête, à supprimer les entêtes des paquets selon les indications contenues dans leurs tables de routage, et ne nécessitent donc pas la mise en oeuvre de logique supplémentaire.

L'invention permet de plus de filtrer les paquets supervisés. Il peut être avantageux de ne superviser que certains paquets. Pour ceci, les tables de routage des différents routeurs sont programmées pour transmettre les paquets souhaités, par exemple les paquets à destination d'un équipement particulier, vers l'équipement de test via les tables de routage. Les autres paquets sont transmis vers les équipements destinataires, la distinction entre les paquets se faisant à partir des entêtes supplémentaires spécifiques ajoutés en tête des paquets.

L'invention permet également de supprimer des données au niveau des routeurs, ce que ne permet pas le fonctionnement standard des réseaux SpaceWire. En effet, la suppression d'une adresse dans la table de routage d'un routeur condamnerait tous les paquets émis vers cette destination. L'invention ajoutant une adresse codant le couple source/destination, elle permet une granularité plus fine permettant de supprimer au niveau routeur tout paquet correspondant à ce couple. Cette fonction peut être utilisée pour empêcher certains équipements de saturer le réseau lors d'un mode de panne.

Un équipement peut être configuré pour transmettre les données directement au noeud destinataire, sans transiter par l'équipement de supervision. Il suffit pour cela de ne pas réaliser l'étape d'ajout de cette adresse supplémentaire spécifique. Le paquet émis comportera alors en tête l'adresse du noeud destinataire et sera routé normalement dans le réseau.

La mise en oeuvre de l'invention nécessite de réserver des adresses afin de caractériser les différents paquets, réduisant ainsi le nombre d'équipements maximum du réseau. Cependant, l'invention est toujours compatible du mécanisme de définition de sous réseaux propre au mode d'adressage logique, ce qui permet d'augmenter la capacité du réseau.

L'invention s'applique également en présence de plusieurs équipements de supervision. Dans ce cas, les paquets seront transmis vers un seul équipement de supervision parmi ceux disponibles, en fonction de l'adresse caractérisant les paquets transmis, et de la configuration des tables de routage.

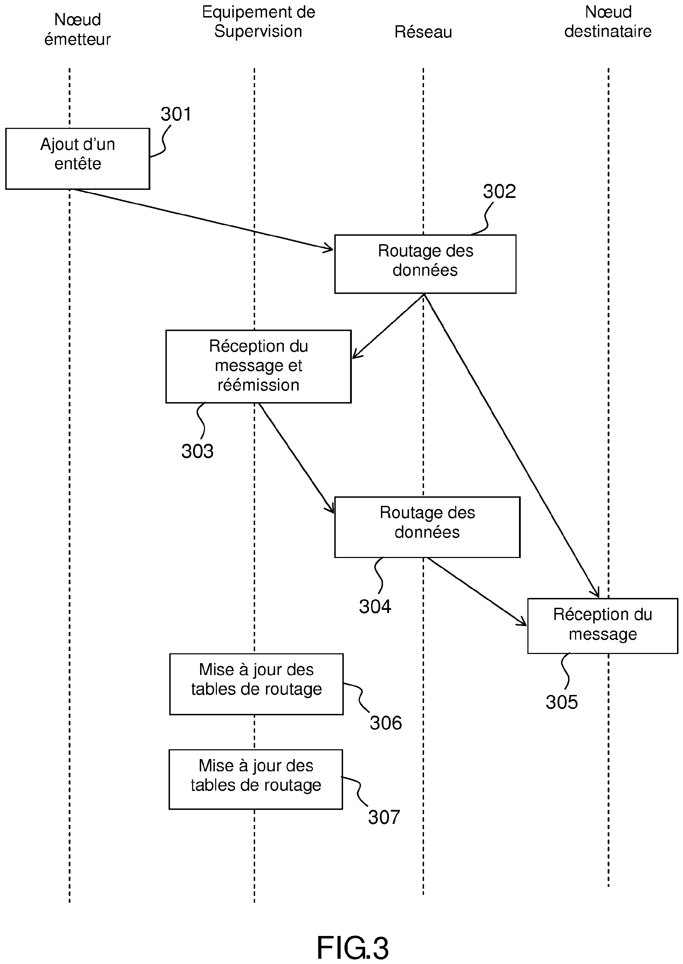

La figure 3 illustre un procédé de mise en oeuvre de l'invention, implémenté pour partie sur les différents instruments du satellite, et pour autre partie sur l'équipement de supervision du réseau.

Le procédé peut être exécuté par une machine de calcul programmable, comme un processeur ou un micro contrôleur par exemple, exécutant un programme comprenant une séquence d'instructions ou scripts, ou par une machine de calcul dédiée (par exemple un ensemble de portes logiques comme un FPGA ou un ASIC, ou tout autre module matériel).

Le procédé comprend une première étape 301, réalisée pour chacun des paquets transmis sur le réseau, d'ajout d'une adresse supplémentaire spécifique en tête des paquets de données émis. Cette adresse permet au minimum d'identifier le noeud destinataire du paquet. Elle peut également caractériser le couple noeud émetteur/noeud destinataire, ou caractériser le noeud destinataire et le type de données transmises.

Si cette étape n'est pas réalisée, les paquets sont routés dans le réseau de manière classique, et ne sont pas disponibles pour la supervision par l'EGSE.

Le procédé comprend ensuite une étape 302 de transmission des paquets dans le réseau, cette transmission étant réalisée en suivant la configuration des tables de routage. Ainsi, selon l'adresse en tête des paquets, ils seront transmis à l'équipement de supervision ou à l'équipement destinataire.

Si l'adresse en tête d'un paquet est l'adresse associée à un noeud destinataire, ce qui correspond par exemple au cas le noeud à l'origine de l'émission du paquet n'est pas configuré pour ajouter d'adresse supplémentaire spécifique en tête des paquets, celui-ci sera acheminé de manière classique vers l'équipement destinataire en fonction des tables de routage.

Si l'adresse en tête d'un paquet est une adresse supplémentaire spécifique, la configuration des tables de routage permettra de déterminer si ce paquet doit être transmis en direction du noeud destinataire, ou en direction de l'équipement de supervision. La configuration des tables de routage permet donc de filtrer les messages reçus par l'équipement de supervision.

Lorsque l'adresse en tête du paquet est une adresse spécifique, le dernier routeur traversé par le paquet de données avant d'atteindre son destinataire, c'est-à-dire suivant les cas le routeur directement relié à l'équipement destinataire ou le routeur directement relié à l'équipement de supervision, est configuré pour supprimer l'adresse d'entête des paquets. Cette instruction est donnée par les tables de routage.

Lorsque les données sont transmises à l'équipement de supervision, celui-ci réalise l'étape 303 de réception du paquet, et de réémission sans modification. Cette étape nécessite que l'équipement EGSE soit configuré pour accepter des paquets pour lesquels l'adresse de destination n'est pas la sienne, et pour renvoyer sur le réseau les paquets reçus sans les modifier. L'EGSE a donc connaissance des données transitant sur le lien supervisé, et peut réaliser les traitements nécessaires à la vérification du bon fonctionnement du réseau. Le message renvoyé dans le réseau ne comprend pas d'adresse spécifique en tête, et est donc traité de manière classique.

Ainsi, lors de l'étape 304, les données sont routées vers l'équipement destinataire, qui reçoit 305 le paquet.

Lorsque les données sont directement transmises à l'équipement destinataire, celui-ci les reçoit lors de l'étape 305 qui suit directement l'étape 302 de routage dans le réseau.

Ce procédé comprend également une étape 306, réalisée lors de la connexion d'un équipement de supervision, de mise à jour des tables de routage de l'ensemble des routeurs du réseau. Cette étape peut survenir à n'importe quel moment. La mise à jour des tables de routage est réalisée en fonction des paquets à superviser, afin d'acheminer vers l'équipement de supervision les paquets comportant certaines adresses en entête, et supprimer cet entête au niveau du routeur auquel l'équipement de test est connecté.

L'étape consiste également à modifier les tables de routages pour acheminer vers l'équipement destinataire les paquets comportant les adresses dont la supervision n'est pas souhaitée, et à supprimer cet entête au niveau du routeur auquel l'équipement de destination est connecté.

La mise à jour des tables de routage peut, par exemple, être réalisée en utilisant la commande RMAP définie par le protocole SpaceWire, émise depuis l'équipement de supervision, manuellement ou automatiquement. Ces commandes permettent la modification, via le lien SpaceWire, des registres de configuration du routeur, dont sa table de routage.

Le procédé comprend enfin une étape 307 de mise à jour de l'ensemble des tables de routage des routeurs du réseau, lorsqu'un élément de supervision du réseau est déconnecté, de manière à associer les adresses précédemment acheminées vers l'équipement de supervision vers les équipements destinataires, et à supprimer l'adresse supplémentaire spécifique au niveau du dernier routeur traversé avant d'atteindre la destination.

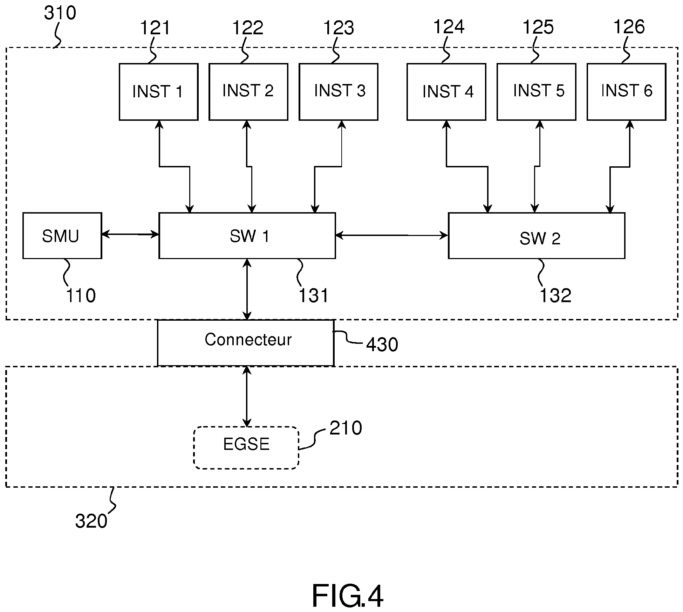

La figure 4 représente une application pratique de mise en oeuvre d'un réseau de communication selon l'invention.

L'ensemble des équipements sont intégrés dans le segment bord 410 du satellite. L'un des routeurs du réseau dispose d'un port 430 permettant de connecter des équipements externes. Ce port peut être déporté de l'équipement de routage en utilisant un bus de données. Ce port peut par exemple être un connecteur de peau (en anglais skin connector), disposé sur l'une des parois du satellite, afin de faciliter les opérations de connexion et de déconnexion lors des phases d'intégration et de test.

Un équipement de supervision EGSE 210 est positionné dans le segment sol 420 du satellite, et est relié aux équipements du segment bord par le biais du port 430.

Ainsi, la supervision des données transitant dans le réseau de communication du satellite peut être réalisée de manière déportée, sans manipuler les liens entre les différents équipements.

L'invention permet donc la mise en oeuvre simplifiée d'équipements de supervision du trafic sur un réseau de communication de type SpaceWire permettant l'envoi d'un paquet vers des destinataires multiples.

Elle se base sur une utilisation particulière du système d'adressage SpaceWire permettant de limiter les contraintes liées aux tests sur le système satellite, et de déporter la complexité sur les moyens de test sol, tout en réduisant drastiquement leur nombre.

Pour ceci, l'invention propose d'exploiter plus d'une adresse de routage pour router les paquets dans le réseau.

Le système de multiple adressage proposé dans l'invention permet à un équipement connecté à l'un des routeurs du réseau de changer le schéma de routage de l'adresse en entête du paquet pour que cette donnée lui soit routée, puis réinjecte le paquet avec la seconde adresse pour qu'il arrive à la destination normalement prévue.

Ces opérations sont réalisées de manière transparente pour les équipements du satellite, qui communiquent de manière identique en présence et en l'absence d'un ou plusieurs équipements de supervision.

Ainsi, la mise en oeuvre de l'invention n'entraine pas de coûts matériels supplémentaires sur le segment satellite, et permet de réduire le nombre d'équipements de tests nécessaires.

L'invention est également compatible avec des équipements n'ajoutant pas d'entête sur les paquets transmis, ces paquets n'étant pas acheminés vers l'équipement de supervision.

## Revendications

1. Equipement (210) de supervision des échanges de données dans un réseau de communication comprenant une pluralité de noeuds (110, 121 à 126) échangeant des données par paquets, et au moins un routeur (131 et 132) configuré pour router lesdits paquets de données entre les différents noeuds, ledit équipement de supervision étant **caractérisé en ce qu'**il est configuré pour permettre la mise à jour des tables de routage des au moins un dits routeurs, et pour, lors de la réception d'un paquet de données depuis un routeur sur un de ses ports, renvoyer ledit paquet de données au routeur par le même port sans le modifier.

2. Equipement de supervision des échanges de données selon la revendication 1, utilisant un protocole de communication choisi parmi le protocole SpaceWire et le protocole SpaceFibre.

3. Réseau de communication comprenant une pluralité de noeuds (110, 121 à 126) échangeant des données par paquets, et au moins un routeur (131 et 132) configuré pour router lesdits paquets de données entre lesdits noeuds identifiés par des adresses dans le réseau, ledit réseau de communication étant **caractérisé en ce que** :
• au moins un desdits noeuds est configuré pour ajouter en tête de chacun des paquets de données émis une adresse spécifique,
• ledit réseau de communication permet de connecter au moins un équipement de supervision des données (210) à un des au moins un dits routeurs,
• lesdits au moins un routeur sont configurés pour transmettre les paquets de données comportant une dite adresse spécifique audit au moins un équipement de supervision ou au noeud destinataire en fonction de ladite adresse spécifique, et
• ledit au moins un équipement de supervision est configuré pour renvoyer au routeur auquel il est connecté par un port, les paquets de données reçus sans les modifier.

4. Réseau de communication selon la revendication 3, dans lequel ladite adresse spécifique est une adresse associée au noeud destinataire, et différente de son adresse dans le réseau.

5. Réseau de communication selon l'une des revendications 3 à 4, dans lequel lesdits noeuds et lesdits au moins un routeur sont intégrés dans un satellite, et ledit au moins un équipement de supervision est situé à l'extérieur dudit satellite.

6. Réseau de communication selon l'une des revendications 3 à 5, dans lequel lesdits noeuds, ledit au moins un routeur, et ledit au moins un équipement de supervision, utilisent un protocole de communication choisi parmi le protocole SpaceWire et le protocole SpaceFibre.

7. Procédé de communication dans un réseau de communication comprenant une pluralité de noeuds (110, 121 à 126) échangeant des données par paquets, et au moins un routeur (131 et 132) configuré pour router lesdits paquets de données entre des noeuds identifiés par des adresses dans le réseau, ledit réseau comprenant au moins un connecteur permettant de connecter au moins un équipement de supervision (210) à un des dits au moins un routeur, ledit procédé étant **caractérisé en ce qu'**il comprend :
• lors de la transmission de paquets de données dans le réseau de communication :
∘ une étape (301) d'ajout, en tête du paquet de données émis par un noeud du réseau, d'au moins une adresse spécifique,
∘ une première étape (302) de routage du paquet de données vers l'un parmi un noeud de destination ou ledit équipement de supervision, selon l'adresse en tête du paquet et lesdites tables de routage,
▪ lorsque les données sont transmises vers l'équipement de supervision, une étape (303) de réception du paquet de données par ledit équipement de supervision et de réémission à l'identique, suivi d'une deuxième étape (304) de routage du paquet de données vers ledit noeud de destination,
∘ une étape (305) de réception, par ledit noeud de destination, du paquet de données, et
• une étape (306) de mise à jour des tables de routage de chacun des routeurs du réseau, lors de la connexion d'un dit équipement de supervision,
• une étape (307) de mise à jour des tables de routage de chacun des routeurs du réseau, lors de la déconnexion d'un équipement de supervision.

8. Procédé de communication selon la revendication 7, dans lequel ladite adresse spécifique est une adresse associée au noeud destinataire, et différente de son adresse dans le réseau.

9. Procédé de communication selon l'une des revendications 7 à 8, dans lequel ladite première étape (302) de routage du paquet de données vers un noeud de destination ou ledit équipement de supervision, comprend en outre la suppression de ladite adresse spécifique en tête du paquet de données lorsque le routeur est le dernier routeur parcouru par ledit paquet de données.

10. Procédé de communication selon l'une des revendications 7 à 9, dans lequel l'adresse spécifique ajoutée en tête de chacun des paquets de données émis est en outre associée au noeud émetteur.

11. Procédé de communication selon l'une des revendications 7 à 10, dans lequel l'adresse spécifique ajoutée en tête de chacun des paquets de données émis est en outre associée au type de données transmises.

12. Procédé de communication selon l'une des revendications 7 à 11, dans lequel ledit réseau de communication utilise un protocole de communication choisi entre le protocole SpaceWire et le protocole SpaceFibre.

## Patentansprüche

1. Ausrüstung (210) zum Überwachen von Datenaustausch in einem Kommunikationsnetzwerk, das mehrere Knoten (110, 121 bis 126), die Daten nach Paketen austauschen, und wenigstens einen Router (131 und 132) umfasst, konfiguriert zum Routen der Datenpakete zwischen den verschiedenen Knoten, wobei die Überwachungsausrüstung **dadurch gekennzeichnet ist, dass** sie zum Zulassen des Aktualisierens der Routing-Tabellen des wenigstens einen Routers und, beim Empfang eines Datenpakets von einem Router auf einem seiner Ports, zum Zurücksenden des Datenpakets zum Router über denselben Port zulässt, ohne es zu modifizieren.

2. Ausrüstung zum Überwachen von Datenaustausch nach Anspruch 1, die ein Kommunikationsprotokoll benutzt, ausgewählt aus dem SpaceWire-Protokoll und dem SpaceFibre-Protokoll.

3. Kommunikationsnetzwerk, das mehrere Knoten (110, 121 bis 126), die Daten nach Paketen austauschen, und wenigstens einen Router (131 und 132) umfasst, konfiguriert zum Routen der Datenpakete zwischen den anhand von Adressen in dem Netzwerk identifizierten Knoten, wobei das Kommunikationsnetzwerk **dadurch gekennzeichnet ist, dass**:
• wenigstens einer der Knoten zum Hinzufügen einer spezifischen Adresse zum Kopf jedes der gesendeten Datenpakete konfiguriert ist,
• das Kommunikationsnetzwerk das Verbinden von wenigstens einer Ausrüstung zum Überwachen von Daten (210) mit einem des wenigstens einen Routers zulässt,
• der wenigstens eine Router zum Senden der eine spezifische Adresse enthaltenden Datenpakete zu der wenigstens einen Überwachungsausrüstung oder zum Zielknoten in Abhängigkeit von der spezifischen Adresse konfiguriert ist, und
• die wenigstens eine Überwachungsausrüstung zum Zurücksenden der empfangenen Datenpakete zu dem Router konfiguriert ist, mit dem sie durch einen Port verbunden ist, ohne sie zu modifizieren.

4. Kommunikationsnetzwerk nach Anspruch 3, bei dem die spezifische Adresse eine mit dem Zielknoten assoziierte Adresse ist, die sich von seiner Adresse im Netzwerk unterscheidet.

5. Kommunikationsnetzwerk nach einem der Ansprüche 3 bis 4, in dem die Knoten und der wenigstens eine Router in einem Satelliten integriert sind und die wenigstens eine Überwachungsausrüstung sich außerhalb des Satelliten befindet.

6. Kommunikationsnetzwerk nach einem der Ansprüche 3 bis 5, bei dem die Knoten, der wenigstens eine Router und die wenigstens eine Überwachungsausrüstung ein Kommunikationsprotokoll benutzen, ausgewählt aus dem SpaceWire-Protokoll und dem SpaceFibre-Protokoll.

7. Verfahren zur Kommunikation in einem Kommunikationsnetzwerk, das mehrere Knoten (110, 121 bis 126), die Daten nach Paketen austauschen, und wenigstens einen Router (131 und 132) umfasst, konfiguriert zum Routen der Datenpakete zwischen den nach Adressen in dem Netzwerk identifizierten Knoten, wobei das Netzwerk wenigstens einen Verbinder umfasst, der das Verbinden von wenigstens einer Überwachungsausrüstung (210) mit einem des wenigstens einen Routers zulässt, wobei das Verfahren **dadurch gekennzeichnet ist, dass** es Folgendes beinhaltet:
• während des Sendens von Datenpaketen in dem Kommunikationsnetzwerk:
∘ einen Schritt (310) des Hinzufügens von wenigstens einer spezifischen Adresse zum Kopf des durch einen Netzwerkknoten gesendeten Datenpakets,
∘ einen ersten Schritt (302) des Routens des Datenpakets zu einem aus einem Zielknoten oder der Überwachungsausrüstung gemäß der Adresse im Kopf des Pakets und den Routing-Tabellen,
• während des Sendens der Daten zu der Überwachungsausrüstung einen Schritt (303) des Empfangens, durch die Überwachungsausrüstung, und des identischen, erneuten Sendens des Datenpakets, gefolgt von einem zweiten Schritt (304) des Routens des Datenpakets zum Zielknoten,
∘ einen Schritt (305) des Empfangens, durch den Zielknoten, des Datenpakets, und
• einen Schritt (306) des Aktualisierens der Routing-Tabellen von jedem der Router des Netzwerks während des Verbindens einer Überwachungsausrüstung,
• einen Schritt (307) des Aktualisierens der Routing-Tabellen von jedem der Router des Netzwerks während des Abtrennens einer Überwachungsausrüstung.

8. Kommunikationsverfahren nach Anspruch 7, in dem die spezifische Adresse eine mit dem Zielknoten assoziierte Adresse ist, die sich von seiner Adresse im Netzwerk unterscheidet.

9. Kommunikationsverfahren nach einem der Ansprüche 7 bis 8, in dem der erste Schritt (302) des Routens des Datenpakets zu einem Zielknoten oder der Überwachungsausrüstung ferner das Löschen der spezifischen Adresse im Kopf des Datenpakets beinhaltet, wenn der Router der letzte Router ist, den das Datenpaket durchläuft.

10. Kommunikationsverfahren nach einem der Ansprüche 7 bis 9, in dem die zum Kopf jedes der gesendeten Datenpakete hinzugefügte spezifische Adresse ferner mit einem Sendeknoten assoziiert ist.

11. Kommunikationsverfahren nach einem der Ansprüche 7 bis 10, in dem die zum Kopf jedes der gesendeten Datenpakete hinzugefügte spezifische Adresse ferner mit dem gesendeten Datentyp assoziiert ist.

12. Kommunikationsverfahren nach einem der Ansprüche 7 bis 11, in dem das Kommunikationsnetzwerk ein Kommunikationsprotokoll benutzt, ausgewählt aus dem SpaceWire-Protokoll und dem SpaceFibre-Protokoll.

## Claims

1. An item of equipment (210) for monitoring data exchanges in a communication network comprising a plurality of nodes (110, 121 to 126) exchanging data by packets and at least one router (131 and 132) configured to route said data packets between the various nodes, said monitoring equipment being **characterised in that** it is configured to enable updating the routing tables of the at least one said router and, when a data packet is received from a router on one of its ports, to return said data packet to the router via the same port without modifying it.

2. The item of equipment for monitoring data exchanges according to claim 1, using a communication protocol selected from the SpaceWire protocol and the SpaceFibre protocol.

3. A communication network comprising a plurality of nodes (110, 121 to 126) exchanging data by packets and at least one router (131 and 132) configured to route said data packets between said nodes identified by addresses in the network, said communication network being **characterised in that**:
• at least one of said nodes is configured to add a specific address to the header of each of the transmitted data packets;
• said communication network allows at least one item of data monitoring equipment (210) to be connected to one of the at least one routers;
• said at least one router is configured to transmit the data packets comprising one of said specific addresses to said at least one item of monitoring equipment or to the destination node as a function of said specific address; and
• said at least one item of monitoring equipment is configured to return the received data packets to the router to which it is connected via a port without modifying them.

4. The communication network according to claim 3, wherein said specific address is an address associated with the destination node and differs from its address in the network.

5. The communication network according to any one of claims 3 to 4, wherein said nodes and said at least one router are integrated in a satellite and said at least one item of monitoring equipment is located outside said satellite.

6. The communication network according to any one of claims 3 to 5, wherein said nodes, said at least one router and said at least one item of monitoring equipment use a communication protocol selected from the SpaceWire protocol and the SpaceFibre protocol.

7. A method for communicating in a communication network comprising a plurality of nodes (110, 121 to 126) exchanging data by packets and at least one router (131 and 132) configured to route said data packets between nodes identified by addresses in the network, said network comprising at least one connector allowing at least one item of monitoring equipment (210) to be connected to one of said at least one routers, said method being **characterised in that** it comprises:
• when data packets are transmitted in the communication network:
∘ a step (301) of adding at least one specific address to the header of the data packet transmitted by a node of the network;
∘ a first step (302) of routing the data packet towards one of the destination nodes or said item of monitoring equipment according to the address in the packet header and said routing tables;
▪ when the data is transmitted towards the item of monitoring equipment, a step (303) of said item of monitoring equipment receiving the data packet and of retransmitting it unchanged, followed by a second step (304) of routing the data packet towards said destination node;
∘ a step (305) of said destination node receiving the data packet; and
• a step (306) of updating the routing tables of each of the routers of the network when connecting a said item of monitoring equipment;
• a step (307) of updating the routing tables of each of the routers of the network when disconnecting an item of monitoring equipment.

8. The communication method according to claim 7, wherein said specific address is an address that is associated with the destination node and that differs from its address in the network.

9. The communication method according to any one of claims 7 to 8, wherein said first step (302) of routing the data packet towards a destination node or towards said item of monitoring equipment further comprises the deletion of said specific address at the data packet header when the router is the last router passed through by said data packet.

10. The communication method according to any one of claims 7 to 9, wherein the specific address added to the header of each of the emitted data packets is also associated with the transmitter node.

11. The communication method according to any one of claims 7 to 10, wherein the specific address added to the header of each of the transmitted data packets is also associated with the type of transmitted data.

12. The communication method according to any one of claims 7 to 11, wherein said communication network uses a communication protocol selected between the SpaceWire protocol and the SpaceFibre protocol.
